# EUROPÄISCHE PATENTANMELDUNG

(11) **EP 4 443 011 A1**
(43) Veröffentlichungstag der Anmeldung: **09.10.2024**
(21) Anmeldenummer: 23162117.8
(22) Anmeldetag: 15.03.2023
(51) Int. Cl.: F16B 37/08

(54) **MUTTER**

(71) Anmelder: Giehl, Arno, 50996 Köln (DE)
(72) Erfinder: Giehl, Arno, 50996 Köln (DE)
(74) Vertreter: btb IP Bungartz Baltzer Partnerschaft mbB Patentanwälte

(57) **Zusammenfassung**

Die Erfindung betrifft eine Mutter mit einem äußeren Spannkörper (1) mit einer axialen Segmentaufnahme, in der eine Gewindeeinheit mit Gewindesegmenten (2, 3) verschiebbar gehalten ist, und mit nach innen ragenden Führungsstiften (5, 6), wobei die Gewindesegmente (2, 3) eine gebogene Innenseite mit Gewindegängen aufweisen und zu einem Innengewinde (4) zusammensetzbar und durch eine Spreizfeder (8) auseinandergedrückt sind und die Gewindeeinheit Führungsmittel aufweist, die mit den Führungsmitteln des Spannkörpers (1) die Gewindesegmente (2,3) in der Segmentaufnahme führen und bei Aufschieben des Spannkörpers (1) die Innenseiten aufeinander zubewegen. Die Gewindesegmente (2, 3) weisen Seitenflächen (11) auf und die Führungsstifte (5, 6) ragen in Spalte zwischen gegenüberliegende Seitenflächen (11), wobei die Seitenflächen (11) im vorderen Abschnitt einen Anschlag für die Führungsstifte (5 oder 6) bilden.

Bei den bekannten Muttern könnte der Schutz vor Beschädigung der Spreizfeder (8) und gegen Auseinanderfallen der Mutter besser sein. Dies erreicht die Erfindung dadurch, dass zumindest eine der Seitenflächen (11) derart konturiert ist, dass die Seitenflächen (11) im hinteren Bereich der Mutter, aus Sicht der Führungsstifte (5, 6) vor der Spreizfeder (11), einen Sicherungsanschlag (7) für die Führungsstifte (5 oder 6) bilden.

## Beschreibung

Die Erfindung betrifft eine Mutter nach dem Oberbegriff des Anspruchs 1. Die gattungsgemäße Mutter ist aus der WO 01/88390 A1 bekannt und dient zum Aufschieben über einen Weg des Gewindebolzens in einer axialen Anziehrichtung, zunächst noch ohne Gewindeeingriff, wobei nach Erreichen der Fläche, an der sich die nach dem Anziehen abstützen wird, die Mutter in einen Zustand mit Gewindeeingriff verbracht wird und anschließend wie eine konventionelle Mutter angezogen werden kann. In der folgenden Beschreibung wird der Bereich der Mutter, der beim bestimmungsgemäßen Anziehen der Mutter der Fläche zugewandt ist, gegen die sich die Mutter dann abstützt, als vorderer Bereich bezeichnet. Der gegenüberliegende Bereich wird dann als hinterer Bereich bezeichnet.

Ein Vorteil der bekannten Mutter besteht darin, dass durch das Schieben über das Außengewinde des Gewindebolzens zunächst ohne Gewindeeingriff Zeit und Mühe für das Verbringen der Mutter in die Halteposition eingespart werden kann und erst dann das Innengewinde der Mutter zum Verbringen der Mutter in den Zustand mit Gewindeeingriff verengt wird, so dass dieses in Eingriff mit dem Außengewinde gelangt und anschließend die Mutter, wie die konventionelle Mutter, angezogen werden kann. Hierdurch können zum Beispiel zum Anziehen der Mutter mit dem gewünschten Anzugsmoment nur eine oder einige wenige Umdrehungen notwendig sein, während bei einer konventionellen Mutter eine Vielzahl von Umdrehungen notwendig war, um die Mutter drehend längs eines langen Gewindebolzens zu bewegen, nur um sie in die Nähe der späteren Fixierposition zu verbringen. Ein weiterer Vorteil der bekannten Mutter besteht darin, dass sie sich oft noch lösen lässt, während klassische Muttern nach längerem Verbleib festgerostet und kaum noch lösbar sind.

Zur Umsetzung der oben genannten Funktionen weist die Mutter einen relativ zur Anziehrichtung vorderen Abschnitt und einen hinteren Abschnitt, sowie einen äußeren Spannkörper mit einer zumindest einseitig offenen, axialen Segmentaufnahme, ersten Führungsmitteln und radial nach innen ragenden Führungsstiften auf. In der bei der bekannten Mutter als Durchgangsöffnung ausgebildeten Segmentaufnahme ist eine Gewindeeinheit in Anziehrichtung verlagerbar, insbesondere verschiebbar, gehalten, Die Gewindeeinheit weist ein erstes Gewindesegment und zumindest ein zweites Gewindesegment auf, wobei das erste Gewindesegment und das zweite Gewindesegment wiederum eine gebogene Innenseite mit Abschnitten von Gewindegängen aufweisen und zu einem segmentierten Innengewinde zusammensetzbar ist. Natürlich kann die Gewindeeinheit auch drei der mehr Gewindesegmente aufweisen.

Die Gewindesegmente werden von einer insbesondere im hinteren Bereich der Mutter vorgesehen Spreizfeder auseinandergedrückt. An der von den Gewindesegmenten und der Spreizfeder gebildeten Gewindeeinheit sind zweite Führungsmittel vorgesehen, die derart mit den ersten Führungsmitteln zusammenwirken, dass das erste Gewindesegment und das zweite Gewindesegment in der Segmentaufnahme geführt sind. Ferner wird hierdurch bewirkt, dass bei Aufschieben des Spannkörpers auf die Gewindeeinheit in eine Schließstellung die gebogenen Innenseiten der Gewindesegmente derart in Richtung der Mittelachse der Mutter und aufeinander zubewegt sind, dass die Abschnitte von Gewindegängen das Innengewinde bilden, also zwar nicht notwendigerweise durchgängige Gewindegänge bilden, aber so angeordnet sind, dass sie wie ein Gewinde wirken. Die übrigen Bereiche der Gewindesegmente sind dabei so ausgebildet, dass sie räumlich zurückspringen und das Einschrauben eines Außengewindes in das Innengewinde nicht stören oder gar blockieren.

Das erste Gewindesegment und das zweite Gewindesegment weisen längs der Anziehrichtung verlaufende Seitenflächen auf. Dies sind die seitlichen Stirnflächen der zum Beispiel als Halbschalen ausgebildeten Gewindesegmente, die jeweils einander zugewandt sind. Die Führungsstifte ragen in Spalte zwischen zwei gegenüberliegenden Seitenflächen, wobei zumindest eine der Seitenflächen derart konturiert ist, dass die Seitenflächen im vorderen Abschnitt einen Anschlag für die Führungsstifte bilden, sich der Spalt also soweit verjüngt, dass die Führungsstifte an der Verengung anschlagen.

Die bekannte Mutter funktioniert sehr gut. Sie erlaubt das Aufschieben des Verbundes aus Spannkörper und darin in Lösestellung gehaltener Gewindeeinheit auf einen Gewindebolzen, das anschließende Drücken des Spannkörpers auf die Gewindeeinheit unter Abstützung der Gewindeeinheit an der Widerlagerfläche, an der die Mutter zum Einsatz kommt, mit dem Schließen des Innengewindes und das finale Anziehen der Mutter mittels eines üblichen Schlüssels.

Die Mutter hat aber den Nachteil, dass kein Anschlag für die Führungsstifte im hinteren Bereich vorhanden ist bzw. der Anschlag von der die Spreizfeder bildenden Ringfeder gebildet ist, wenn der Spannkörper von der Spannstellung in die Lösestellung zurückgeschoben wird, etwa um die Mutter wieder von dem Bolzen zu lösen. Zum einen wird hierdurch eine Querkraft auf die Spreizfeder aufgebracht, zum anderen besteht bei Bruch oder Beschädigung der Spreizfeder die Möglichkeit, dass der Anschlag aufgehoben wird und die Gewindeeinheit aus dem Spannkörper herausfallen kann.

Aufgabe der Erfindung ist es daher, eine Mutter zu schaffen, die eine erhöhte Sicherheit gegen unbeabsichtigte Beschädigung und unbeabsichtigtes Zerfallen aufweist.

Diese Aufgabe wird nach der Erfindung durch eine Mutter nach Anspruch 1 gelöst. Die neue Mutter ist insbesondere dadurch gekennzeichnet, dass zumindest eine der Seitenflächen derart konturiert ist, dass die Seitenflächen im hinteren Bereich der Mutter, aus Sicht der Führungsstifte vor der Spreizfeder, einen Sicherungsanschlag für die Führungsstifte bilden.

Durch die erfindungsgemäße Weiterbildung der bekannten Mutter wird nun ein zusätzlicher Anschlag vorgesehen, der sich im hinteren Bereich der Mutter befindet. In diesem hinteren Bereich, jedoch auch hinter dem zusätzlichen Anschlag, sind die Spreizmittel in Form einer Spreizfeder bzw. mehrerer Spreizfedern vorgesehen. Die Spreizmittel haben die Aufgabe, die Gewindesegmente auseinander zu drücken, wenn sich der Spannkörper in Öffnungsstellung befindet. In dieser Stellung ragen die im Spannkörper geführten Gewindesegmente der Gewindeeinheit vorne aus dem Spannkörper heraus. Da Spannkörper und Gewindeeinheit über geeignete Führungsmittel, beispielsweise sich konisch nach vorne erweiternde Kontakt- oder Führungsflächen, einen radialen Bewegungsspielraum bei Verlagern des Spannkörpers von der Schließstellung in die Öffnungsstellung ermöglichen, können die Gewindesegmente von den Spreizmitteln auseinandergedrückt werden, so dass das Innengewinde der Mutter mit dem Außengewinde des Bolzens außer Eingriff kommt.

Umgekehrt bewirkt ein Aufschieben des bei einer bevorzugten Ausgestaltung ringförmigen, mit einer Sechskantkontur zum Ansetzen eines Ring- oder Maulschlüssels versehen Spannkörpers das Drücken der Gewindesegmente nach innen, so dass sich hierdurch ein segmentiertes Gewinde ergibt, das dann mit dem Außengewinde in Eingriff steht. Die Spreizmittel sind üblicherweise Federmittel. Dies können in den Seitenflächen der Gewindesegmente vorgesehene Druckfedern oder auch eine Ringfeder im hinteren Bereich der Mutter sein.

Der zusätzliche Anschlag schützt nun im Falle einer Ringfeder diese Spreizfeder, die bisher den Anschlag bildete. Üblicherweise schiebt der Benutzer die Mutter in der Lösestellung des Spannkörpers über den Gewindebolzen, bis sie an der Fläche, an der sie sich später nach Anziehen abstützen soll, anschlägt. Dann wird der Spannkörper weiter in Richtung dieser Fläche verlagert, bis die Gewindesegmente ruckartig nach innen gedrückt werden und die Führungsstifte am Anschlag anliegen. Hierbei verbleibt zwischen dem Spannkörper und der Fläche, gegen die sich die Mutter abstützt, ein Spalt, da ja sichergestellt sein muss, dass die die Mutter gegen Lösen sichernde Reibkraft zwischen dieser Fläche und der Gewindeeinheit auch tatsächlich definiert aufgebaut werden kann.

Da der Spannkörper auch bei angezogener Mutter axial beweglich bleibt, kann dieser nicht genutzt werden, um die Mutter über eine Reibkraft zu fixieren. Darüber hinaus ist ein Spalt zwischen dem Spannkörper und der Fläche, gegen die sich die Mutter abstützt, oft auch gewünscht, da dieser genutzt werden kann, um bei festsitzender, zum Beispiel infolge von Rost nicht mehr lösbarer Mutter, ein Lösen der Mutter zu vereinfachen. In diesem Fall kann der Spannkörper über einen Schraubendreher oder einen Keil in Richtung des hinteren Bereichs der Mutter und von den vorderen Bereichen der Gewindesegmente weggedrückt werden, so dass die Gewindesegmente und der Spalt zwischen den Seitenflächen teilweise freigelegt werden und die Gewindesegmente radial von dem Bolzen gelöst werden können.

Der zusätzliche Anschlag schützt nun eine ringförmige Spreizfeder davor, dass sie beim Lösen des Spannkörpers, also in der Öffnungsstellung der Mutter, beschädigt wird. Darüber hinaus kann es passieren, dass die Spreizfeder vorher bereits beschädigt war, so dass sich über die konturierte Seitenfläche auch ganz ohne Spreizfeder ein Anschlag ergibt. Schließlich ist es natürlich auch möglich, Federmittel zu verwenden, die ausschließlich zwischen den Seitenflächen angeordnet sind, aber im Gegensatz zu einer Ringfeder nicht umlaufend sind. Solche Federmittel sind üblicherweise kleine Schraubenfedern, die in Sacklöchern in der Mantelfläche der Gewindesegmente gehalten sind. Diese Schraubenfedern sind konstruktionsbedingt nicht geeignet, einen Anschlag für die Führungsstifte zu bilden.

Schließlich kann durch die Erfindung auch vollständig auf eine Spreizfeder verzichtet werden. Die Spreizfeder hat zwar den dann nicht mehr vorhandenen Vorteil, dass sie bei Lösen des Spannkörpers die Gewindesegmente auseinanderdrückt, so dass die Gewindeeinheit und damit die ganze Mutter, insoweit sie nicht festgerostet ist, leicht vom Gewindebolzen abgezogen werden kann, jedoch kann diese Funktion auch über Führungsmittel realisiert werden, die die Bewegung der Gewindesegmente auch ohne Federkraft alleine durch eine Führung ermöglichen. Ferner ist es natürlich möglich, selbst auf diese, die Gewindesegmente beim Lösen nach außen bewegenden Führungsmittel zu verzichten. In diesem Fall läge kein Anschlag vor, so dass die Gewindesegmente aus dem Spannkörper herausfallen könnten. Die Erfindung verhindert dies nun durch die Bereitstellung des Sicherungsanschlags.

Selbst wenn die Gewindesegmente auf dem Außengewinde festgebacken sein sollten, kann, wie oben erwähnt, die Mutter oft noch gelöst werden. Hierzu wird der Spannkörper nach hinten gedrückt, was, wenn auch er festgebacken sein sollte, mit einem ruckhaften Lösen nach einem Aufhebeln oder nach Hammerschlägen verbunden sein kann. Anschließend kann der Benutzer dann ein Spreizmittel, zum Beispiel einen Schraubenzieher in den Spalt zwischen den Gewindesegmenten einführen und die Gewindesegmente vom Außengewinde zum Lösen der Mutter abhebeln. Der erfindungsgemäße Sicherungsanschlag verhindert nun, dass beim Lösen des Spannkörpers die Spreizfeder nicht durch die auf der Innenseite des Spannkörpers hervorspringenden Führungsstifte beschädigt wird.

Die Seitenflächen sind bevorzugt so konturiert, dass sie im vorderen Bereich der Mutter mit zueinander parallelen Abschnitten flächig einander gegenüber liegen. Hier wird ein Spalt verbleiben, der jedoch lediglich zum Ausgleich von Fertigungstoleranzen dient, so dass die Mutter sicher durch Aufschieben des Spannkörpers geschlossen werden kann. Dieser Spalt kann daher klein bleiben, insbesondere weniger als 2 mm weiter bevorzugt nur 1 mm betragen oder noch kleiner sein. Letztlich hängt dies natürlich vom Nenndurchmesser der Mutter ab. Wichtig ist aber die Tatsache, dass der Spalt deutlich kleiner ist als der Durchmesser der Führungsstifte, damit sich ein Anschlag im vorderen Bereich ergibt.

Zwischen dem vorderen Bereich der Mutter unterhalb des oben genannten Anschlages und dem erfindungsgemäß nun vorgesehenen Sicherungsanschlag im hinteren Bereich der Mutter befindet sich ein Abschnitt, in dem die Seitenflächen der Gewindesegmente weitgehend geradlinig sind, so dass sich ein kontinuierlicher Spalt ergibt, in dem die Führungsstifte während des Verschiebens des Spannkörpers relativ zu den Gewindesegmenten hin und her beweglich sind. Dieser Spalt kann, da die Führungsstifte in diesem Bereich weitgehend funktionslos sind, deutlich größer sein als die Dicke der Führungsstifte.

In Richtung des hinteren Bereiches der Mutter verengt sich der Spalt zwischen den gegenüberliegenden Seitenflächen der Gewindesegmente wieder. Da die Gewindesegmente nach dem Bewegen des Spannkörpers in Lösestellung mit etwa der Hälfte ihrer Länge aus dem Spannkörper herausragen, besteht das Risiko, dass sie nicht ausreichend sicher gehalten sind. Dies vermeidet die Form des Spaltes, da die Gewindesegmente über die Führungsstifte in der verbleibenden Führung durch die Kraft der Spreizfeder in flächige Anlage an der Innenseite des Spannkörpers gehalten sind.

Unter dem längs verlaufendem Bereich verengt sich der Spalt dann zwischen den Seitenflächen noch weiter, so dass sich der Sicherungsanschlag ergibt. Hierzu sind, sofern vorhanden, oberhalb der Spreizfeder, in der Kontur der Seitenflächen zu den gegenüberliegenden Seitenflächen hervorspringende Nasen vorgesehen, die in Öffnungsstellung des Spannkörpers einen Abstand zueinander aufweisen, der kleiner ist als die Dicke der Führungsstifte. Da die aufzunehmenden Kräfte im Bereich des Sicherungsanschlages nicht so groß sind wie im Bereich des vorderen Anschlages, können die Nasen hier etwas kleiner gehalten werden, um Platz für die unterhalb des Sicherungsanschlages angeordnete Ringnut zu schaffen, in der die Spreizfeder gehalten ist.

Bevorzugt weist die Mutter zwei Gewindesegmente auf, wobei natürlich auch drei oder mehr Gewindesegmente möglich wären, die aber technisch bei den meisten Anwendungen keinen zusätzlichen Nutzen bringen. Die Gewindeeinheit setzt sich aus den umfangsmäßig zusammengesetzten Gewindesegmenten zusammen. Grundsätzlich kann ihre Außenkontur, also die Außenkontur der Gewindesegmente, jede Form aufweisen. Als besonders vorteilhaft hat sich aber auch hier im vorderen Bereich eine sechseckige Form und im hinteren Bereich eine zylindrische Form der Gewindeeinheit erwiesen.

Bei Verwendung von zwei Gewindesegmenten mit sechseckiger Außenkontur der Gewindeeinheit weisen diese dann drei ebene Flächen auf, die über gekrümmte, linienartige Verbindungsbereiche in einander übergehen. Hierdurch ergeben sich im Bereich der Krümmung signifikante, parallel zur Anziehrichtung verlaufende, linienartige Vorsprünge, die in korrespondierenden Nuten in der Innenfläche des Spannkörpers geführt sein können. Diese Nuten bilden dann die ersten Führungsmittel, während die Vorsprünge die zweiten Führungsmittel bilden. Hierdurch ergibt sich auch gleichzeitig eine Sicherung gegen Verdrehen der Gewindeeinheit innerhalb des Spannkörpers.

Bevorzugt weisen die verwendeten Gewindesegmente die gleiche Form auf. Dies bedeutet, dass die einander gegenüberliegenden Seitenflächen der Gewindesegmente ebenfalls grundsätzlich gleich geformt sind, jedoch zueinander spiegelverkehrt angeordnet sind. Solche Gewindesegmente lassen sich, wenn die Gewindeeinheit von zwei Gewindesegmenten gebildet ist, besonders einfach herstellen, da die beiden Seitenflächen eines Gewindesegments zueinander planparallele Flächen aufweisen, die nach Einspannen des Rohlings, beispielsweise spanend, ohne Werkzeugwechsel und Positionswechsel des Rohlings hergestellt werden können. Die Gewindeabschnitte müssen sich nicht über die gesamte innere Fläche der Gewindesegmente erstrecken, wobei natürlich die verbleibenden Flächen so weit räumlich zurückspringen müssen, dass sie nicht in den Bereich des Gewindes hineinragen.

Je nachdem, für welchen Zweck die Mutter vorgesehen ist, kann die Segmentaufnahme als Durchgangsöffnung ausgebildet sein oder, wie im Falle einer Hutmutter, einseitig geschlossen sein. Soll die Mutter auf einen längeren Gewindebolzen aufgeschoben werden, um dem Benutzer das eingangs beschriebene Verdrehen der Mutter über einen längeren Gewindegang zu ersparen, muss die Segmentaufnahme natürlich eine Durchgangsöffnung sein. Ist dieser Aspekt nicht vorrangig, kann die Mutter auch wie eine Hutmutter ausgebildet sein, in diesem Fall ist der Spannkörper dann auf der vorderen Seite geschlossen, wobei er, ebenfalls wie eine Hutmutter, einen mehr oder weniger langen Bereich aufweisen kann, in den ein überstehende Gewindegang des Außengewindes eintauchen kann.

Während im Falle einer Durchgangsöffnung die Mutter bei den meisten Anwendungen wie eine Sechskantmutter angezogen werden wird und hierzu der Spannkörper eine entsprechende Sechskantkontur aufweist, kann im Falle einer Hutmutter natürlich auch jede andere Form Verwendung finden, so könnte die Oberfläche des Spannkörpers auch eine Einsenkung aufweisen, die das Ansetzen eines Inbusschlüssels oder eines vergleichbaren Werkzeugs erlaubt.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: eine dreidimensionale Darstellung einer erfindungsgemäßen Mutter,
- Fig. 2: die Gewindeeinheit der Mutter aus Figur 1 in einer Seitenansicht,
- Fig. 3: die Einzelheit Z aus Figur 2,
- Fig. 4: ein Gewindesegment der in den Figuren 1 bis 3 dargestellten Mutter in einer Ansicht aus Sicht des in Einbaulage gegenüberliegenden Gewindesegments,
- Fig. 5: eine Seitenansicht einer weiteren Ausgestaltung der Erfindung, teilweise im Schnitt in Schließstellung der Mutter,
- Fig. 6: die in Figur 5 dargestellte Mutter in Öffnungsstellung und
- Fig. 7: den Spannkörper der in den Figuren 5 und 6 dargestellten Ausgestaltung der Mutter in einer dreidimensionalen Darstellung.

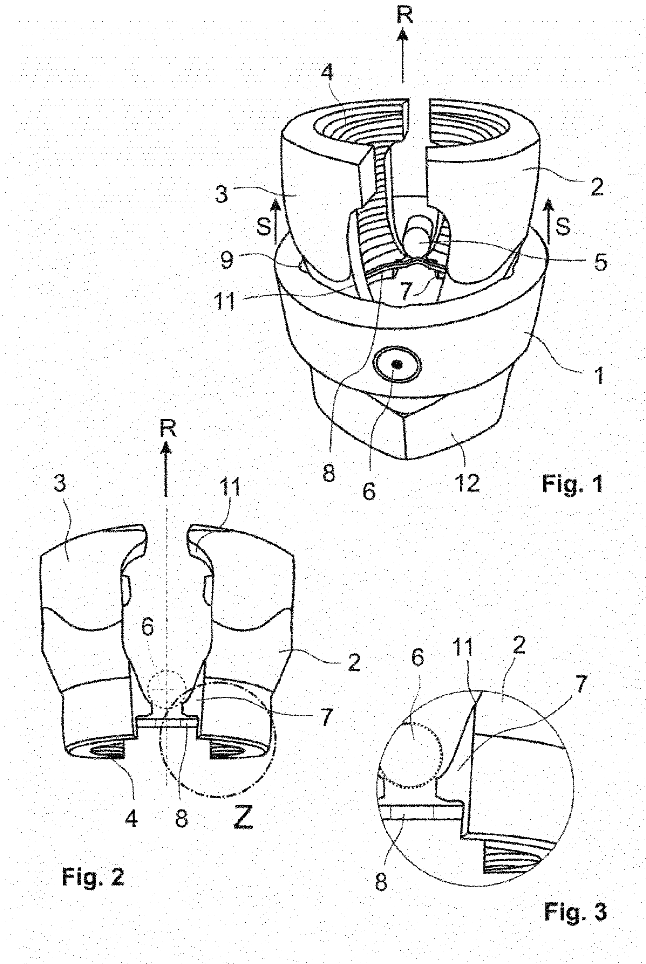

In Figur 1 ist eine erfindungsgemäße Mutter in einer dreidimensionalen Darstellung gezeigt. Die Mutter weist eine segmentierte Gewindeeinheit, hier mit zwei Gewindesegmenten 2,3, auf. Die Gewindesegmente 2,3 werden von einer im relativ zur Anziehrichtung R hinteren Bereich der Mutter (in der Zeichnung unten) von einer Spreizfeder 8 auseinandergedrückt bzw. in Anlage gegen die Innenfläche eines Spannkörpers 1 angestellt. Der Spannkörper 1 weist hier eine Durchgangsöffnung als Segmentaufnahme auf. Die Spreizfeder 8 ist hier als ringförmig entlang der inneren Mantelfläche der Segmentaufnahme des Spannkörpers 1 und damit um die Außenseite der Gewindeeinheit herum verlaufende Biegefeder (Ringfeder) ausgebildet.

In der in Figur 1 dargestellten Orientierung der Gewindesegmente 2,3 ist das Innengewinde 4 in einem "inaktiven" Zustand, das heißt, die Gewindesegmente 2,3 sind auseinandergerückt und können mit einem Außengewinde des Nenndurchmessers der Mutter nicht zusammenwirken. Zum Überführen der Mutter in den aktiven Zustand wird der Spannkörper 1 nach in eine Spannrichtung S nach oben geschoben bzw. die Gewindeeinheit in den Spannkörper 1 eingedrückt. Hierdurch werden die Gewindesegmente 2,3 aufeinander zubewegt und das Innengewinde 4 erhält in Schließstellung seinen Nenndurchmesser. Auf der Innenseite des Spannkörpers 1 sind Führungsstifte 5,6 vorgesehen, die in Spalte zwischen gegenüberliegende Seitenflächen 11 der Gewindesegmente 2,3 ragen. Diese Führungsstifte 5,6 wirken mit Anschlägen zusammen, die von den konturierten Seitenflächen 11 im vorderen und hinteren Bereich der Mutter bzw. der Gewindeeinheit gebildet werden.

In Figur 2 ist die Gewindeeinheit der Mutter aus Figur 1 ohne den Spannkörper 1 dargestellt. Zu erkennen ist, dass die Seitenflächen 11 der Gewindesegmente 2,3 im oberen Bereich hervorspringende, von der Seite gesehen flache Abschnitte aufweist, die dem jeweils anderen Gewindesegment 3,2 zugewandte ebene Flächen besitzen. Der obere Bereich in der Zeichnung ist der vordere Bereich der Mutter mit dem die Mutter sich gegen die Fläche abstützt, gegen die sie in Anziehrichtung R angeschraubt wird. Bei Zusammensetzen der Gewindesegmente 2,3 zu der Gewindeeinheit liegen diese ebenen Flächen unter Belassung eines kleinen Spaltes gegenüber, wobei der Spalt kleiner als der Durchmesser der Führungsstifte 5,6 ist. Auf diese Weise ergibt sich ein vorderer Anschlag, der wirksam wird, wenn der Spannkörper 1 auf die Gewindesegmente 2,3 zum Schließen der Mutter aufgeschoben wird.

Im unteren Bereich ist ein weiterer Anschlag, nämlich der Sicherungsanschlag 7, vorgesehen. Dieser wird von zwei hervorspringenden Nasen gebildet, die sich von den Seitenflächen 11 der Gewindesegmente 2,3 in Richtung des gegenüberliegenden Gewindesegments 3,2 erstrecken. Unterhalb des Sicherungsanschlages 7 ist die Spreizfeder 8 angeordnet. Der Spalt zwischen den Gewindesegmenten 2,3 kann sich durch Verschieben der Gewindeeinheit innerhalb des Spannkörpers 1 nur so weit öffnen, dass zwischen den Nasen an der engsten Stelle ein Restspalt verbleibt, der kleiner ist als die Dicke der Führungsstifte 5,6.

Die Nasen weisen an ihrer, der Vorderseite der Mutter und damit den Führungsstiften 5,6 zugewandten Seite im gezeigten Ausführungsbeispiel eine gerundete Oberfläche auf, so dass sich eine flächige Anlage an die Außenfläche der Führungsstifte 5,6 ergibt. Auf der gegenüberliegenden Seite sind die Nasen kantig mit einer zur Anziehrichtung R rechtwinkligen Kontur ausgebildet, die sich in die Form der Aufnahmenut 10 für die Spreizfeder 8 einfügt und damit eine ebene Abstützfläche für die Spreizfeder 8 bildet. Sofern die Spreizfeder 8 keine ebene Oberfläche aufweist, sondern beispielsweise aus einem runden Federdraht gefertigt ist, kann diese Seite der Nase natürlich zur Bildung der flächigen Anlage an die Form des Querschnitts der Spreizfeder 8 angepasst sein.

In Figur 3 ist der Bereich des Sicherungsanschlages 7 mit der von der Seitenfläche 11 vorspringenden Nase des rechten Gewindesegments 2 aus Figur 2 als Einzelheit Z in einer vergrößerten Darstellung wiedergegeben. Hier sind insbesondere die Form der Nase und die Kontur der Seitenfläche 11 in diesem unteren Bereich zu erkennen. Die Nase setzt den Bereich der Aufnahmenut 10 für die ringförmige Spreizfeder 8 fort, die einen rechteckigen Querschnitt aufweist und sich somit ggfs. flächig an der Nase abzustützen vermag.

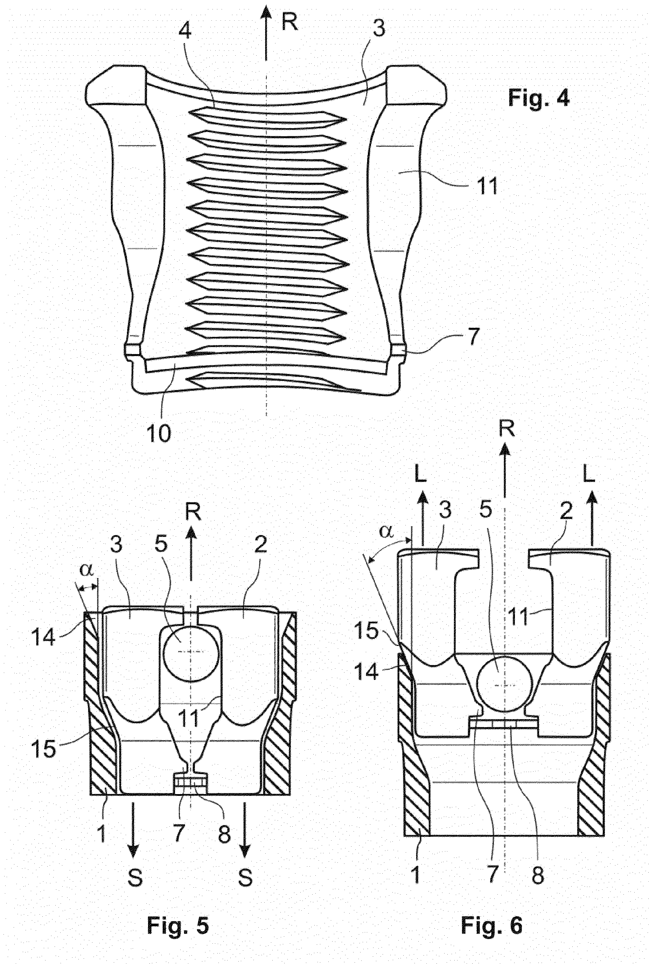

Figur 4 zeigt eines der beiden Gewindesegmente 3 der Mutter aus den Figuren 1-3. Das jeweils andere Gewindesegment 2 hat die gleiche Form. Da hier nur zwei Gewindesegmente 2,3 verwendet werden, können die Teilflächen der Seitenflächen 11 auf beiden Seiten des Gewindesegments 3 in einer Ebene liegen, was die Herstellung der Gewindesegmente 2,3 deutlich vereinfacht.

Im mittleren Bereich sind die Gewindegänge des Innengewindes 4 dargestellt. Dieses Innengewinde 4 erstreckt sich hier durch die im unteren Bereich vorgesehene Aufnahmenut 10 zur Aufnahme der Spreizfeder 8, wobei die Aufnahme so tief ist, dass die Spreizfeder 8 außerhalb des Bereiches liegt, in dem der Gewindebolzen mit dem Außengewinde in die Mutter geschraubt wird. Alternativ kann der untere Bereich mit der Aufnahmenut 10 und der Spreizfeder 8 auch einen größeren Durchmesser aufweisen, so dass hierüber vermieden ist, dass die Spreizfeder 8 das Gewinde 4 blockiert.

In Figur 5 ist eine weitere Ausgestaltung der Erfindung dargestellt. Diese unterscheidet sich von der in den Figuren 1 bis 4 dargestellten Variante dadurch, dass die Gewindesegmente 2,3 Segmentanlageflächen 15 aufweisen, die sich in der geöffneten Stellung, wenn also der Spannkörper 1 von der Gewindeeinheit nach hinten, so weit es aufgrund seiner geführten Kopplung mit der Gewindeeinheit möglich ist, abgezogen ist, auf inneren Stützflächen 14 des Spannkörpers 1 abstützen.

Figur 5 zeigt dabei die geschlossene Stellung der Mutter, während in Figur 6 die geöffnete Stellung dargestellt ist. Zu erkennen ist zunächst die Grundfunktion, die auch die in den Figuren 1 bis 4 dargestellte Ausführungsform aufweist. Der schraffiert im Schnitt dargestellte Spannkörper 1 ist relativ zu der Gewindeeinheit, die auch hier von zwei identischen Gewindesegmenten 2,3 gebildet ist, um einen definierten Weg in eine Löserichtung L und eine Schließrichtung S hin und her verschiebbar. Dieser Weg wird durch die Führungsstifte 5,6 sowie in Schließrichtung S einen oberen Anschlag und in Löserichtung L den unteren Sicherungsanschlag 7 begrenzt. Auch hier ist unterhalb des Sicherungsanschlages 7 eine Ringfeder als Spreizfeder 8 vorgesehen.

Zum Öffnen der Mutter wird die Gewindeeinheit in Löserichtung L - bei der dargestellten Orientierung nach oben - geschoben bzw. gedrückt. Hierdurch wird es der Spreizfeder 8 ermöglicht, die Gewindesegmente 2,3 innerhalb des sich erweiternden Bereiches des Spannkörpers 1 nach außen zu drücken. Hierzu ist die innere Mantelfläche des Spannkörpers 1 ebenso wie die äußere Mantelfläche der Gewindeeinheit abgestuft. Durch die Bewegung der Gewindesegmente 2,3 radial nach außen und oben wird der obere Bereich der Gewindesegmente 2,3 aus dem Innenraum der Durchgangsbohrung des ringförmigen Spannkörpers 1 heraus verlagert. Damit die so geöffnete Gewindeeinheit trotz der Öffnung weiterhin möglichst formstabil bleibt, ist nun eine flächige Anlage der radial nach außen gedrückten Gewindesegmente 2,3 an den oberen Rand des Spannkörpers 1 vorgesehen.

Für die flächige Anlage ist der obere Rand der inneren Mantelfläche der Durchgangsbohrung des Spannkörpers 1 abschnittsweise nach außen abgeflacht. Diese abgeflachten Bereiche als Stützfläche 14 sind hier eben ausgebildet, wobei natürlich auch eine gekrümmte Fläche dieser Bereiche möglich ist. Wesentlich ist nur die korrespondierende Segmentanlagefläche 15, die möglichst flächig an der Stützfläche 14 anliegt.

Im gezeigten Ausführungsbeispiel weist die Gewindeeinheit nach Zusammensetzen der Gewindesegmente 2,3 zu der segmentierten Gewindeeinheit eine Sechskantform auf. Die gerundeten Kanten dieser Außenform sind in Führungsnuten 9 der Segmentaufnahme des Spannkörpers 1 geführt. Diese Führungsnuten 9 sind nicht unbedingt notwendig, sichern aber die Gewindeeinheit gegen Verdrehen und verhindern somit auch, dass die Führungsstifte 5,6 gegen die Seitenflächen 11 der Gewindesegmente 2,3 gedrückt werden können, wenn ein Drehmoment auf den Spannkörper 1 aufgebracht wird.

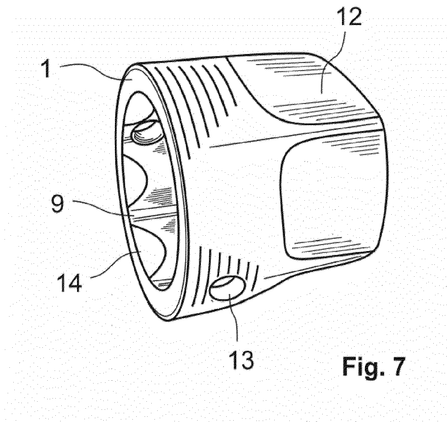

Figur 7 zeigt den Spannkörper 1 der Ausgestaltung nach der Figur 5 bzw. Figur 6 in einer dreidimensionalen Darstellung. Zu erkennen ist, dass der Spannkörper 1 an seiner sechseckigen Außenkontur 12, wie eine konventionelle Mutter, im vorderen Bereich eine Sechskantform aufweist, so dass ein üblicher Maul- oder Ringschlüssel ansetzbar ist. Die hier nicht sichtbare Segmentaufnahme erlaubt es, einen längeren Gewindebolzen durch die Mutter hindurch zu führen. Sollte natürlich die Länge des Gewindebolzens an die Höhe der Mutter angepasst sein und es nicht notwendig sein, dass der Gewindebolzen im vorderen Bereich aus der Mutter heraussteht, etwa wie es im Falle einer Hutmutter der Fall ist, kann der Spannkörper 1 auch wie eine Hutmutter oben geschlossen sein.

Figur 7 veranschaulicht die Lage der Stützflächen 14 für die Segmentanlageflächen 15. In den Figuren 5 und 6 ist zu erkennen, dass die Stützflächen 14 um einen Winkel α nach außen geneigt sind. Der Winkel α liegt bevorzugt in einem Bereich zwischen 20° und 40°. Als besonders praktikabel hat sich der Bereich zwischen 25° und 35° erwiesen, wobei ein Winkel α von 28° bevorzugt wird. Werden nun die Gewindesegmente 2,3 von der in Figur 5 gezeigten Schließstellung, in der die Gewindesegmente 2,3 nach unten in Schließrichtung S bewegt sind, in die der Schließrichtung S entgegengerichtete löse Richtung L verlagert, wandern die Gewindesegmente 2,3 seitlich nach außen, bis sich der abgestufte Bereich mit den Segmentanlageflächen 15 an den Stützflächen 14 abstützt.

Der Spannkörper 1 nach Figur 7 weist als Durchgangsöffnung, die auch als Sacklöcher auf der Innenseite der Mantelfläche ausgebildet sein könnten, Stiftaufnahmen 13 zur Aufnahme der Führungsstifte 5,6 auf. Bei der hier dargestellten Ausführungsform werden die Führungsstifte 5,6 in die Stiftaufnahme 13 eingepresst, so dass sie dort fest gehalten sind. Alternativ könnten die Führungsstifte 5,6 auch in die Stiftaufnahme 13 eingeschraubt werden. Hierzu ist dann eine entsprechende Gewindepaarung an den Führungsstiften 5,6 und der Stiftaufnahme 13 vorgesehen.

Die Spreizfeder 8 drückt die Gewindesegmente 2,3 nach außen, so dass sich ein guter Halt der Gewindesegmente 2,3 ergibt, was einen qualitativ hochwertigen Eindruck erzeugt, andererseits aber auch während der Bewegung der Mutter über das Außengewinde dafür Sorge trägt, dass die Gewindesegmente 2,3 auf Abstand zum Außengewinde gehalten werden, so dass das Aufschieben der Mutter auf den Gewindebolzen mit verringerter Gefahr des Verhakens der Segmente des Innengewindes 4 mit dem Außengewinde möglich wird.

Wie auch schon bei der Ausgestaltung nach den Figuren 1 bis 4 weist die Gewindeeinheit auch bei dem hier gezeigten Ausführungsbeispiel im vorderen Bereich eine äußere Form in Form eines Sechskantes auf. Dies ist zwar nicht unbedingt notwendig, hat sich aber als eine bevorzugte Variante herausgestellt. Dieser vordere Bereich geht in einen zylindrischen hinteren Bereich mit verringertem Durchmesser über. Im Übergangsbereich zwischen diesen Bereichen sind die Segmentanlageflächen 15 ausgebildet, die hier dadurch hergestellt sind, dass der konisch nach hinten und innen zulaufende Übergangsbereich flächig abgefräst wird oder die Flächen anderweitig eingeformt werden. Letzteres kann bei größeren Stückzahlen beispielsweise durch Schmieden oder Prägen erfolgen.

Die in den Figuren 5 bis 7 gezeigte Ausgestaltung weist also im Bereich des Spannkörpers 1 zwei Abstufungen auf. Eine erste Abstufung befindet sich im mittleren Bereich und bewirkt bei Verlagern der Gewindesegmente 2,3 in Schließrichtung S in Verbindung mit dem invertiert abgestuften Bereich der Gewindeeinheit das Schließen der Gewindeeinheit. Im vorderen Bereich des Spannkörpers 1 befindet sich die zweite Abstufung, die sich hier bis zum äußeren Rand erstreckt. Diese wiederum erzeugt die flächige Anlage über die Stützflächen 14 und die Segmentanlageflächen 15.

Natürlich können die beiden korrespondieren Flächen, nämlich die Stützfläche 14 und die Segmentanlagefläche 15, auch als umlaufender, schrägstehender, glatter oder gekrümmter Bogen ausgebildet sein. Letztlich ist für diesen Aspekt der Erfindung lediglich eine flächige Anlage des mittleren Bereichs der Gewindesegmente 2,3 im oberen Randbereich oder auch in einem etwas darunter gelegenen Endbereich des Spannkörpers 1 wesentlich.

Zur Sicherung der Mutter gegen unbeabsichtigtes Lösen kann der Spannkörper 1 auch einen oder mehrere Sicherungsstifte aufweisen, die in Öffnungen, beispielsweise Sacklöcher, in der Außenseite der Gewindesegmente 2,3 eingedrückt werden können. Alternativ kann die Außenseite der Gewindesegmente 2,3 auch abschnittsweise rechtwinklig zur Anziehrichtung R gestuft ausgebildet sein, so dass sich fehlende Sperrelemente, die an der Innenkontur des Spannkörpers 1 angeordnet sein können, an den Stufen abstützen können.

Diese Ausgestaltung kann so ausgebildet sein, dass das Lösen des Spannkörpers 1 von der zusammengedrückten, segmentierten Gewindeeinheit nur noch zerstörungsbehaftet möglich ist, in dem zum Beispiel beim Lösen die Sperrelemente zerstört werden. Die Sperrelemente und der gestufte Bereich können dabei auch als Kunststoffbauteil ausgebildet sein, so dass sich ein elastischer Sicherungsbereich ergibt, der aber einfach bei entsprechender Kraftaufbringung unter Zerstörung der Kunststoffteile als Opferbauteil überwunden werden kann. Die Kunststoffbauteile können dann bevorzugt auch austauschbar sein, um die Mutter nach dem Lösen wieder einsatzbereit machen zu können.

Schließlich kann der Spannkörper 1 auch auf die Gewindesegmente 2,3 in Spannrichtung S aufgeschraubt werden. Hierzu wird es meist empfehlenswert sein, zunächst die Gewindesegmente 2,3 nach der oben beschriebenen Weise oder auch anderweitig an das Außengewinde anzustellen und erst dann mit einigen Drehbewegungen den Spannkörper 1 auf die Gewindeeinheit aufzuschreiben. Auch hier können Sicherungsstifte oder die oben beschriebenen gestuften Rastmöglichkeiten für Sperrklinken von der Gewindeeinheit das unbeabsichtigte Lösen des Spannkörpers 1 von der Gewindeeinheit verhindern.

Natürlich können sowohl die Gewindeeinheit und, sofern auf diese aufgeschraubt, auch der Spannkörper 1 wie konventionelle Schrauben als aktiv gesicherte oder selbstsichernde Schraubverbindung ausgestaltet sein.

### Bezugszeichenliste:

- 1: Spannkörper
- 2: Erstes Gewindesegment
- 3: Zweites Gewindesegment
- 4: Innengewinde
- 5: Erster Führungsstift
- 6: Zweiter Führungsstift
- 7: Sicherungsanschlag
- 8: Spreizfeder
- 9: Führungsnut
- 10: Aufnahmenut
- 11: Seitenfläche
- 12: Sechseckige Außenkontur
- 13: Stiftaufnahme
- 14: Stützfläche für die Segmentanlagefläche
- 15: Segmentanlagefläche

- α: Winkel zwischen Stützfläche und der Anziehrichtung

- R: Anziehrichtung der Mutter
- L: Löserichtung des Spannkörpers
- S: Spannrichtung des Spannkörpers

## Patentansprüche

1. Mutter zum Aufschrauben auf einen Gewindebolzen in einer axialen Anziehrichtung (R) mit einem jeweils relativ zur Anziehrichtung (R) vorderen Abschnitt und einem hinteren Abschnitt und mit
• einem Spannkörper (1) mit einer zumindest einseitig offenen Segmentaufnahme, ersten Führungsmitteln und radial nach innen ragenden Führungsstiften (5, 6),
• einer in der Segmentaufnahme zumindest in Anziehrichtung (R) hin- und her beweglichen Gewindeeinheit, die zumindest zwei Gewindesegmente (2,3) mit gebogenen, Gewindegangabschnitte aufweisenden Innenseiten aufweist, wobei die Gewindesegmente (2,3) zu einem segmentierten Innengewinde (4) zusammensetzbar sind,
• an der Gewindeeinheit vorgesehenen zweiten Führungsmitteln, die derart mit den ersten Führungsmitteln zusammenwirken, dass die Gewindesegmente (2,3) in der Segmentaufnahme geführt sind und bei Bewegen des Spannkörpers (1) relativ zur Gewindeeinheit in Anziehrichtung (R) die gebogenen Innenseiten derart aufeinander zubewegt sind, dass die Gewindegangabschnitte das Innengewinde (4) bilden,
wobei die Gewindesegmente (2,3) beidseitig längs der Anziehrichtung (R) verlaufende Seitenflächen (11) aufweisen und die Führungsstifte (5,6) in Spalte zwischen gegenüberliegende Seitenflächen (11) ragen und zumindest eine der Seitenflächen (11) derart konturiert ist, dass die Seitenflächen (11) im vorderen Abschnitt der Mutter einen Anschlag für die Führungsstifte (5,6) bilden,
**dadurch gekennzeichnet, dass**
zumindest eine der Seitenflächen (11) derart konturiert ist, dass die Seitenflächen (11) im hinteren Abschnitt der Mutter einen Sicherungsanschlag (7) für die Führungsstifte (5,6) bilden.

2. Mutter nach Anspruch 1, **dadurch gekennzeichnet, dass** die Gewindeeinheit zumindest eine, insbesondere im hinteren Abschnitt der angeordnete Spreizfeder (8) aufweist, die eine radiale Spreizkraft auf die Gewindesegmente (2,3) ausübt, wobei aus Sicht der Führungsstifte (5,6) der Sicherungsanschlag (7) vor der Spreizfeder (8) angeordnet ist.

3. Mutter nach einem der beiden vorhergehenden Ansprüche, **dadurch gekennzeichnet, dass** die Seitenflächen (11) zumindest eines Gewindesegments (2 der 3) im vorderen Bereich der Mutter einen ebenen Abschnitt aufweisen, der rechtwinklig zur Anziehrichtung (R) angeordnet ist und dessen glatte Oberfläche parallel zur Anziehrichtung (R) und zur benachbarten Seitenfläche (11) verläuft.

4. Mutter nach einem der vorhergehenden Ansprüche, **dadurch gekennzeichnet, dass** die gegenüberliegenden Seitenflächen (11) der Gewindesegmente (2,3) im vorderen Bereich der Mutter jeweils einen, in Richtung des benachbarten Gewindesegments (2 oder 3) hervorspringenden Abschnitt aufweisen, wobei die hervorspringenden Abschnitte gemeinsam den vorderen Anschlag für den Führungsstift (5 oder 6) bilden.

5. Mutter nach einem der vorhergehenden Ansprüche, **dadurch gekennzeichnet, dass** die gegenüberliegenden Seitenflächen (11) der Gewindesegmente (2,3) im hinteren Bereich der Mutter jeweils einen, in Richtung des benachbarten Gewindesegments (2 oder 3) hervorspringenden Abschnitt aufweisen, wobei die hervorspringenden Abschnitte jeweils gemeinsam den hinteren Sicherungsanschlag (7) für die Führungsstifte (5,6) bilden.

6. Mutter nach dem vorhergehenden Anspruch, **dadurch gekennzeichnet, dass** die Seitenflächen (11) der Gewindesegmente (2,3) die gleiche Grundform aufweisen, so dass die einander zugewandten Seitenflächen (11) jedes Gewindesegments (2, 3) zueinander gespiegelt sind und zwischen dem oberen Anschlag und dem hinteren Sicherungsanschlag (7) einen geraden Abschnitt aufweisen, der parallel zur Anziehrichtung (R) verläuft.

7. Mutter nach einem der vorhergehenden Ansprüche, **dadurch gekennzeichnet, dass** im Bereich des oberen Anschlags bei vollständig auf die Gewindeeinheit aufgeschobenem Spannkörper (1) ein Spalt von weniger als 2mm, bevorzugt von 1 mm oder weniger verbleibt.

8. Mutter nach einem der vorhergehenden Ansprüche, **dadurch gekennzeichnet, dass** die innere Mantelfläche des Spannkörpers (1) abschnittsweise als Gleitfläche Teil der ersten Führungsmittel ist und die zweiten Führungsmittel abschnittsweise die äußere Mantelfläche der zusammengesetzten Gewindesegmente (2, 3) als Gleitfläche umfassen.

9. Mutter nach dem vorhergehenden Anspruch, **dadurch gekennzeichnet, dass** das erste Gewindesegment (2) und das zweite Gewindesegment (3) an ihrer Außenseite im dem hinteren Bereich der Mutter zugewandten Endbereich von hinten nach vorne radial nach außen um einen Winkel (α) abgeschrägte Segmentanlageflächen (15) und die innere Mantelfläche des Spannkörpers (1) im dem vorderen Bereich der Mutter zugewandten Endbereich um den Winkel (α) nach außen abgeschrägte Stützflächen (14), die mit den Segmentanlageflächen (15) derart zusammenwirken, dass sich beim Verlagern der Gewindesegmente (2,3) in eine Löserichtung (L) die Segmentanlageflächen (15), gehalten von der Spreizkraft der Spreizfeder (8) auf den abgeschrägten Stützflächen (14) flächig abstützen.

10. Mutter nach dem vorhergehenden Anspruch, **dadurch gekennzeichnet, dass** die Segmentanlageflächen (15) der Gewindesegmente (2,3) und die abgeschrägten Stützflächen (14) des Spannkörpers (1) ebene Flächen sind, wobei die Gewindeeinheit mit den zusammengesetzten Gewindesegmenten (2, 3) insbesondere im vorderen Bereich eine sechseckige, äußere Form und eine sich nach hinten daran anschließende Abstufung zu einem hinteren zylindrischen Bereich mit im Vergleich zum vorderen Bereich geringerem Außendurchmesser aufweist und die Segmentanlageflächen (15) von um den Winkel (α) abgeschrägten Flächen im Übergangsbereich von der den Sechskant bildenden Außenflächen des vorderen Bereichs zum hinteren Bereich gebildet sind.

11. Mutter nach einem der vorhergehenden Ansprüche, **dadurch gekennzeichnet, dass** die Gewindeeinheit genau zwei Gewindesegmente (2, 3) mit identischer Form aufweist und die dem Spannkörper (1) zugewandte Außenseite der Gewindesegmente (2, 3) drei über parallel zur Anziehrichtung (R) verlaufende Krümmungsbereiche ineinander übergehende ebene Abschnitte, aufweist, so dass die zusammengesetzten Gewindesegmente (2, 3) die Form einer Sechskantschraube aufweisen.

12. Mutter nach dem vorhergehenden Anspruch, **dadurch gekennzeichnet, dass** die innere Mantelfläche des Spannkörpers (1) parallel zur Anziehrichtung (R) verlaufende Führungsnuten (9) als zusätzliche Führungen der ersten Führungsmittel aufweist, wobei die Krümmungsbereiche der Gewindesegmente (2, 3) in den Führungsnuten (9) gegen Verdrehen gesichert geführt sind.

13. Mutter nach einem der vorhergehenden Ansprüche, **dadurch gekennzeichnet, dass** der Spannkörper (1) zum Ansetzen eines Maul- oder Ringschlüssels eine sechseckige Außenkontur (12) aufweist.

14. Mutter nach einem der vorhergehenden Ansprüche, **dadurch gekennzeichnet, dass** die Spreizfeder (8) eine Ringfeder ist, die in einer, von einer Einsenkung in der Innenkontur der Gewindesegmente (2, 3) gebildeten Aufnahmenut (10) angeordnet ist.

15. Mutter nach einem der vorhergehenden Ansprüche, **dadurch gekennzeichnet, dass** der hintere Sicherungsanschlag (7) für die Führungsstifte (5 oder 6) von jeweils von den Seitenflächen (11) in Richtung der gegenüberliegenden Seitenflächen (11) hervorspringenden Abschnitten gebildet ist, die oberhalb der Aufnahmenut (10) angeordnet sind.
